# EUROPEAN PATENT SPECIFICATION

(11) **EP 4 336 528 B1**
(45) Date of publication and mention of the grant of the patent: **19.08.2026**
(21) Application number: 22815694.9
(22) Date of filing: 30.03.2022
(51) Int. Cl.: H01G 11/12, H01G 11/78, H01M 50/209, H01M 50/262, H01M 50/271, H01M 50/289, H01M 50/291

(54) **POWER STORAGE APPARATUS**
ENERGIESPEICHERVORRICHTUNG
DISPOSITIF DE STOCKAGE D'ÉLECTRICITÉ

(30) Priority: 04.06.2021 JP 2021094531
(43) Date of publication of application: 13.03.2024
(73) Proprietor: GS Yuasa International Ltd., Kisshoin, Minami-ku, Kyoto-shi, Kyoto 601-8520 (JP)
(72) Inventor: MAEDA, Koki, Kyoto-shi, Kyoto 601-8520 (JP); KAWAI, Takuma, Kyoto-shi, Kyoto 601-8520 (JP); SASAKI, Shun, Kyoto-shi, Kyoto 601-8520 (JP); IWASHIMA, Yasuyuki, Kyoto-shi, Kyoto 601-8520 (JP)
(74) Representative: Isarpatent
(86) International application number: PCT/JP2022/015966
(87) International publication number: WO 2022/254937

(56) References cited:
- JP-A- 2013 016 351
- JP-A- 2017 010 780
- JP-A- 2020 035 711
- JP-A- 2020 533 773
- JP-A- 2021 114 389
- US-A1- 2020 280 035

## Description

### TECHNICAL FIELD

The present invention relates to an energy storage apparatus including an energy storage device and an outer case.

### BACKGROUND ART

Conventionally, there has been known an energy storage apparatus that includes an energy storage device and an outer case that accommodates the energy storage device, and has a structure in which the energy storage device is restrained in the outer case. For example, Patent Document 1 discloses a power supply device (energy storage apparatus) in which a plurality of battery cells (energy storage devices) is interposed between two end plates and accommodated in an upper case and a lower case (outer case). In addition, Patent Document 2 discloses a battery pack capable of preventing an ignition or explosion of a battery cell by including a pack housing having an inside that is in a negative pressure state.

### PRIOR ART DOCUMENTS

### PATENT DOCUMENTS

Patent Document 1: WO 2012/131837 A
Patent Document 2: US 2020/280035 A1

### SUMMARY OF THE INVENTION

### PROBLEMS TO BE SOLVED BY THE INVENTION

The conventional energy storage apparatus has a large number of parts, and thus there is a concern about an increase in weight, an increase in cost, a decrease in productivity, and the like. The energy storage apparatus disclosed in Patent Document 1 has a structure in which, in order to suppress swelling, movement, and the like of the energy storage device in the outer case (the upper case and the lower case), a plurality of energy storage devices is interposed and restrained by two end plates, and the number of parts is large. In the energy storage apparatus, when the number of parts is large, problems such as an increase in weight, an increase in size, an increase in cost, and a decrease in productivity may occur.

The present invention has been made by the inventor of the present application in view of the above problems, and an object thereof is to provide an energy storage apparatus that allows reducing the number of parts.

### MEANS FOR SOLVING THE PROBLEMS

An energy storage apparatus according to one aspect of the present invention is an energy storage apparatus including an energy storage device and an outer case in which the energy storage device is accommodated, in which the outer case includes a first outer case and a second outer case which are disposed side by side in a first direction and are joined to each other, the energy storage device is interposed and restrained between the first outer case and the second outer case in the first direction, the first outer case and the second outer case include a first connecting portion and a second connecting portion which are disposed on outer peripheral portions of the first outer case and the second outer case when viewed from the first direction and are joined in a state of being in contact with each other, and a third connecting portion and a fourth connecting portion which are disposed more inside than the outer peripheral portions when viewed from the first direction and are joined to each other, and the third connecting portion and the fourth connecting portion are joined by a joining member in a state of being separated from each other, and a spacer disposed side by side with the energy storage device in the first direction, wherein a part of the spacer is disposed between the third connecting portion and the fourth connecting portion and a through hole is formed in the part, and the joining member joins the third connecting portion and the fourth connecting portion in a state of penetrating the through hole.

### ADVANTAGES OF THE INVENTION

An energy storage apparatus of the present invention allows reducing the number of parts.

### BRIEF DESCRIPTION OF THE DRAWINGS

Fig. 1 is a perspective view illustrating an external appearance of an energy storage apparatus according to an embodiment.
Fig. 2 is an exploded perspective view illustrating components included in the energy storage apparatus according to the embodiment in an exploded manner.
Fig. 3 is an exploded perspective view illustrating components included in the energy storage apparatus according to the embodiment in an exploded manner.
Fig. 4 is an exploded perspective view illustrating respective components of an energy storage device according to the embodiment in an exploded manner.
Fig. 5 is a perspective view illustrating a configuration of an outer case (a first outer case and a second outer case) according to the embodiment.
Fig. 6 is a perspective view illustrating configurations of spacers (a first spacer and a second spacer) according to the embodiment.
Fig. 7 is a cross-sectional view illustrating a positional relationship between the outer case (the first outer case and the second outer case) and the spacers (the first spacer and the second spacer) according to the embodiment.

### MODE FOR CARRYING OUT THE INVENTION

An energy storage apparatus according to one aspect of the present invention is an energy storage apparatus including an energy storage device and an outer case in which the energy storage device is accommodated, in which the outer case includes a first outer case and a second outer case which are disposed side by side in a first direction and are joined to each other, the energy storage device is interposed and restrained between the first outer case and the second outer case in the first direction, the first outer case and the second outer case include a first connecting portion and a second connecting portion which are disposed on outer peripheral portions of the first outer case and the second outer case when viewed from the first direction and are joined in a state of being in contact with each other, and a third connecting portion and a fourth connecting portion which are disposed more inside than the outer peripheral portions when viewed from the first direction and are joined to each other, and the third connecting portion and the fourth connecting portion are joined by a joining member in a state of being separated from each other.

With this configuration, in the energy storage apparatus, the outer case that accommodates energy storage device includes the first outer case and the second outer case. The energy storage device is interposed and restrained between the first outer case and the second case. The first outer case and the second outer case include the first connecting portion and the second connecting portion that are joined in a state of being joined in a state of being in contact with each other on the outer peripheral portions, and the third connecting portion and the fourth connecting portion that are joined by a joining member in a state of being separated from each other more inside than the outer peripheral portions. By restraining the energy storage devices with the outer case (the first outer case and the second outer case) that accommodates the energy storage device in this manner, the energy storage device can be restrained even if end plates are not disposed. Further, when the energy storage device are restrained by the outer case, there is a possibility that the energy storage device cannot be firmly restrained, and thus the first outer case and the second outer case are joined not only at a position where they are in a state of being in contact with each other (outer peripheral portions) but also at a position where they are separated from each other (more inside than the outer peripheral portions). Thus, the energy storage device can be firmly interposed and restrained by the outer case (the first outer case and the second outer case). Therefore, even when the end plates are not disposed, the energy storage device can be firmly interposed and restrained by the outer case (the first outer case and the second outer case), and hence the number of parts can be reduced.

The energy storage apparatus further includes a spacer disposed side by side with the energy storage device in the first direction, in which a part of the spacer is disposed between the third connecting portion and the fourth connecting portion and a through hole is formed in the part, and the joining member joins the third connecting portion and the fourth connecting portion in a state of penetrating the through hole.

With this configuration, a part of the spacer is disposed between the third connecting portion and the fourth connecting portion, and thus, in order to join the third connecting portion and the fourth connecting portion, the through hole is formed in the part, and the third connecting portion and the fourth connecting portion are joined by passing the joining member through the through hole. Thus, even when a part of the spacer is disposed between the third connecting portion and the fourth connecting portion, the first outer case and the second outer case can be firmly joined to each other. Therefore, even when the end plates are not disposed, the energy storage device can be firmly interposed and restrained by the outer case (the first outer case and the second outer case), and hence the number of parts can be reduced.

The third connecting portion and the fourth connecting portion may be disposed at center portions of the first outer case and the second outer case when viewed from the first direction.

With this configuration, the third connecting portion and the fourth connecting portion are disposed at center portions of the first outer case and the second outer case, and thus the first outer case and the second outer case are joined to each other at the center portions. Thus, the first outer case and the second outer case can be firmly joined to each other. Therefore, even when the end plates are not disposed, the energy storage device can be firmly interposed and restrained by the outer case (the first outer case and the second outer case), and hence the number of parts can be reduced.

In at least one of the third connecting portion and the fourth connecting portion, the joining member that joins the third connecting portion and the fourth connecting portion may be disposed at a position where the joining member is not exposed outward.

With this configuration, the joining member is not exposed outward in at least one of the third connecting portion or the fourth connecting portion, so that airtightness of the outer case can be enhanced and a space can be saved.

The energy storage device may include an electrode assembly having stacked plates in the first direction, and a plurality of the energy storage devices is arranged in a second direction intersecting with the first direction, and the plurality of energy storage devices is interposed and restrained between the first outer case and the second outer case in the first direction.

With this configuration, in the stacking direction of the plates, the plurality of energy storage devices that is arranged in a direction intersecting with the stacking direction of the plates is interposed and restrained between the first outer case and the second outer case. As described above, even when the plurality of energy storage devices is arranged in the direction intersecting with the stacking direction of the plates, the plurality of energy storage devices can be collectively restrained by the first outer case and the second outer case. Thus, the number of parts can be reduced compared to a case where the plurality of energy storage devices is individually restrained.

The present invention can be achieved not only as an energy storage apparatus but also as the outer case (the first outer case and the second outer case) or a combination of the outer case and the spacer.

Hereinafter, an energy storage apparatus according to an embodiment of the present invention (including a modification thereof) will be described with reference to the drawings. Note that the embodiments described below illustrate comprehensive or specific examples. Numerical values, shapes, materials, constituent elements, arrangement positions and connection modes of the constituent elements, manufacturing processes, the order of the manufacturing processes, and the like illustrated in the following embodiments are merely examples, and are not intended to limit the present invention. In the drawings, dimensions and the like are not strictly illustrated. In the drawings, the same or similar components are denoted by the same reference numerals.

In the following description and drawings, a longitudinal direction of the energy storage apparatus, an arrangement direction of an energy storage unit and a control unit, an opposing direction of short side surfaces of a case of an energy storage device, or an arrangement direction of a pair of electrode terminals included in the energy storage device is defined as an X-axis direction. A lateral direction of the energy storage apparatus, an arrangement direction of the energy storage device, a bus bar plate, a bus bar, and a bus bar cover, an arrangement direction of a body and a lid of the case of the energy storage device, or a projecting direction of electrode terminals in the energy storage device is defined as a Y-axis direction. An arrangement direction of a body and a lid of the outer case of the energy storage apparatus, an arrangement direction of the energy storage device and the spacer, an opposing direction of long side surfaces of the case of the energy storage device, a stacking direction of plates of the electrode assembly of the energy storage device, or a vertical direction is defined as a Z-axis direction. The X-axis direction, the Y-axis direction, and the Z-axis direction are directions intersecting (orthogonal in the present embodiment) with each other. Note that, although the Z-axis direction may not be the vertical direction depending on the usage mode, the Z-axis direction will be described below as the vertical direction for convenience of description.

In the following description, an X-axis positive direction indicates an arrow direction of an X-axis, and an X-axis negative direction indicates a direction opposite to the X-axis positive direction. The same applies to the Y-axis direction and the Z-axis direction. Hereinafter, the Z-axis direction may also be referred to as a first direction, the X-axis direction may also be referred to as a second direction, and the Y-axis direction may also be referred to as a third direction. Expressions indicating relative directions or postures, such as parallel and orthogonal, strictly include cases where the directions or postures are not the same. The two directions being parallel not only means that the two directions are completely parallel, but also means that the two directions are substantially parallel, that is, the two directions include a difference of about several percent. Furthermore, in the following description, the expression "insulation" means "electrical insulation".

### (Embodiment)

### [1 General description of energy storage apparatus 1]

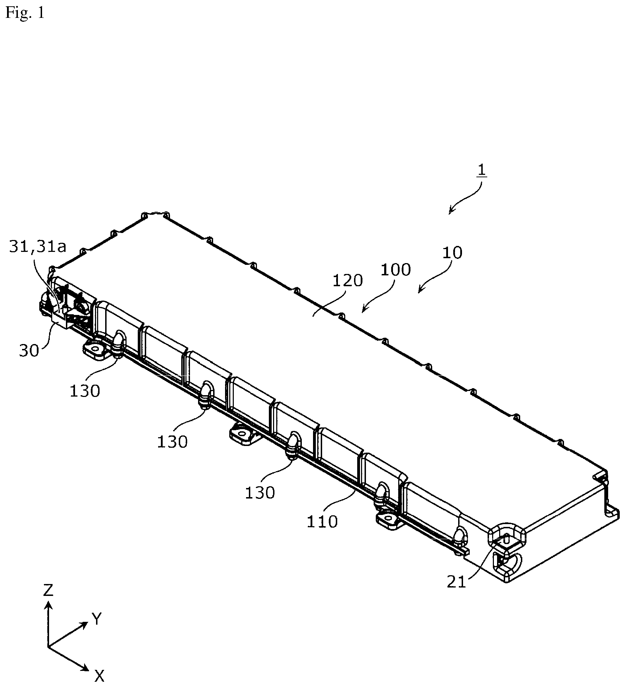

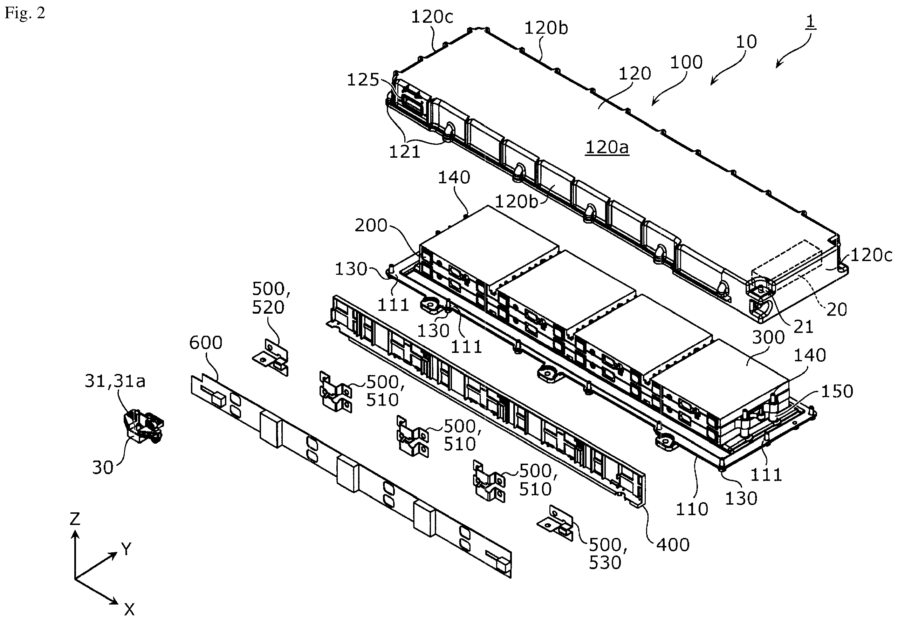

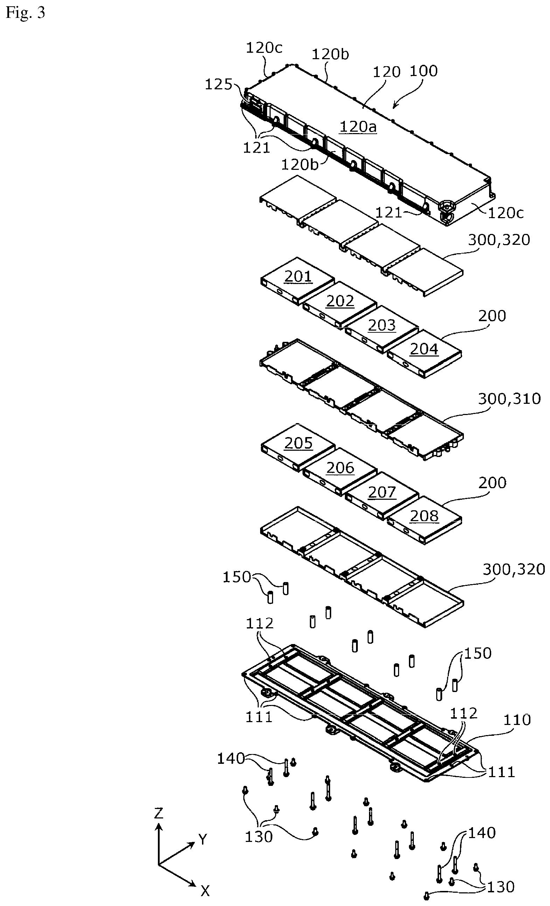

A schematic configuration of an energy storage apparatus 1 in the present embodiment will be described. Fig. 1 is a perspective view illustrating an external appearance of the energy storage apparatus 1 according to the present embodiment. Figs. 2 and 3 are exploded perspective views illustrating components included in the energy storage apparatus 1 according to the present embodiment in an exploded manner. Note that Fig. 3 illustrates a configuration in which an outer case 100, energy storage devices 200, and spacers 300 illustrated in Fig. 2 are further disassembled.

The energy storage apparatus 1 is an apparatus capable of charging electricity from the outside and discharging electricity to the outside, and has a substantially rectangular parallelepiped shape in the present embodiment. The energy storage apparatus 1 is a battery module (assembled battery) used for power storage application, power supply application, or the like. Specifically, the energy storage apparatus 1 is used as a battery or the like for driving or starting an engine of a mobile body such as an automobile, a motorcycle, a watercraft, a ship, a snowmobile, an agricultural machine, a construction machine, or a railway vehicle for electric railway. Examples of the automobile include an electric vehicle (EV), a hybrid electric vehicle (HEV), a plug-in hybrid electric vehicle (PHEV), and a fossil fuel (gasoline, diesel fuel, liquefied natural gas, or the like) automobile. Examples of the railway vehicle for an electric railway include a train, a monorail, a linear motor car, and a hybrid train including both a diesel engine and an electric motor. The energy storage apparatus 1 can also be used as a stationary battery or the like used for home use, business use, or the like.

As illustrated in Fig. 1 and Fig. 2, the energy storage apparatus 1 includes an energy storage unit 10 and a control unit 20, and the energy storage unit 10 includes the outer case 100 and a terminal unit 30. That is, hereinafter, a portion of the energy storage apparatus 1 including the energy storage devices 200 is referred to as an energy storage unit 10, and a portion of the energy storage apparatus 1 including a control device for controlling the energy storage devices 200 is referred to as a control unit 20. As illustrated in Fig. 2 and Fig. 3, the energy storage devices 200, the spacers 300 (a first spacer 310 and second spacers 320), a bus bar plate 400, bus bars 500 (510 to 530), a bus bar cover 600, the control unit 20, and the like are accommodated in the inside of the outer case 100. In addition to the above-mentioned components, the energy storage apparatus 1 may include an exhaust portion or the like for exhausting a gas discharged from the energy storage devices 200 to the outside of the outer case 100.

The terminal unit 30 is a member having an external terminal 31a which is a module terminal (total terminal) on a positive electrode side or a negative electrode side of the energy storage apparatus 1, and is attached to an end in the X-axis negative direction of a side wall in a Y-axis negative direction (a long side wall 120b to be described later) of the outer case 100. The terminal unit 30 includes a bus bar 31. The bus bar 31 is a plate-shaped conductive member, and is formed by, for example, a conductive member made of metal such as aluminum, an aluminum alloy, copper, a copper alloy, or nickel, a combination thereof, or a conductive member other than metal. The bus bar 31 has a configuration in which an end in the Y-axis positive direction is connected to a bus bar 520, and an end in the Y-axis negative direction has a function as the external terminal 31a. The external terminal 31a is, for example, an external terminal on the negative electrode side. Thus, the energy storage devices 200 which the energy storage unit 10 includes and the external terminal 31a are electrically connected to each other through the bus bar 520. The bus bar 31 and the bus bar 520 are connected (joined) by bolt fastening, but may be connected (joined) by welding or the like.

The control unit 20 is a device including a control device (not illustrated) that controls the energy storage devices 200 included in the energy storage unit 10, and is specifically a battery management system (BMS) that controls the energy storage devices 200. The control device is, for example, a circuit board that controls charging-discharging of the energy storage device 200, a fuse, a relay, a semiconductor switch such as a field effect transistor (FET), a shunt resistor, or the like.

An external terminal 21 which is a module terminal (total terminal) on a positive electrode side or a negative electrode side of the energy storage apparatus 1 is disposed at an end of the outer case 100 in the X-axis positive direction and the Y-axis negative direction. The external terminal 21 is a terminal (for example, the external terminal on the positive electrode side) having a polarity different from that of the external terminal 31a of the terminal unit 30. The external terminal 21 is electrically connected to the energy storage device 200. The energy storage apparatus 1 charges electricity from the outside and discharges electricity to the outside through the external terminals 21 and 31a. The external terminal 21 is formed by, for example, any conductive material or the like that can be used for the bus bar 31.

The outer case 100 is a box-shaped (substantially rectangular parallelepiped shape) case (module case) constituting a housing (outer shell) of the energy storage apparatus 1 (energy storage unit 10). The outer case 100 is disposed outward of the energy storage devices 200 and the like, fixes the energy storage devices 200 and the like at predetermined positions, and protects the energy storage devices 200 and the like from an impact or the like. The outer case 100 includes a first outer case 110 and a second outer case 120 which are disposed and aligned in the Z-axis direction (first direction), and joining members 130 and 140 for joining the first outer case 110 and the second outer case 120 to each other, and collars 150.

The first outer case 110 is a flat rectangular member which is disposed in a Z-axis negative direction of the second outer case 120 and constitutes a bottom wall of the outer case 100, and on which the energy storage devices 200 and the like are mounted. The second outer case 120 is a bottomed rectangular cylindrical member that constitutes a body (a portion other than the bottom wall) of the outer case 100, and is connected (joined) to the first outer case 110 to cover the energy storage devices 200 and the like. The second outer case 120 includes an upper wall 120a, a pair of long side walls 120b, and a pair of short side walls 120c. That is, the second outer case 120 is formed with an opening that faces the Z-axis negative direction, and the first outer case 110 functions as a lid body that closes the opening of the second outer case 120. The first outer case 110 and the second outer case 120 are formed by a metal member such as stainless steel, aluminum, an aluminum alloy, iron, or a steel plate, or a member having high rigidity such as the metal member subjected to an insulation treatment such as an insulation coating, from a viewpoint of ensuring safety (pressure breakage resistance). The first outer case 110 and the second outer case 120 can be formed by aluminum die casting or the like. The first outer case 110 and the second outer case 120 may be formed by members made of the same material or may be formed by members made of different materials.

Specifically, connecting portions 111 and 112 which the first outer case 110 includes and connecting portions 121 and the like which the second outer case 120 includes are joined to each other by using the joining members 130 and 140 and the collars 150, and thus the first outer case 110 and the second outer case 120 are connected (fixed) to each other. The long side wall 120b that is the wall (side wall) of the second outer case 120 in the Y-axis negative direction is disposed at a position where the bus bar plate 400, the bus bars 500 (510 to 530), and the bus bar cover 600 are interposed between the long side wall 120b and the energy storage devices 200. A through hole 125 is formed in the long side wall 120b. The through hole 125 is a through hole that is disposed at an end of the long side wall 120b in the X-axis negative direction, penetrates the long side wall 120b in the Y-axis direction, and has a rectangular shape when viewed from the Y-axis direction. The through hole 125 is a through hole through which the bus bar 31 passes when the bus bar 31 of the terminal unit 30 is connected (joined) to the bus bar 520.

In the present embodiment, the first outer case 110 and the second outer case 120 are joined to each other to interpose the energy storage devices 200 therebetween. That is, the first outer case 110 and the second outer case 120 interpose and restrain the energy storage devices 200 in the Z-axis direction (first direction), and thus apply a restraining force to the energy storage devices 200 in the Z-axis direction. Specifically, the first outer case 110 and the second outer case 120 are disposed over a plurality of energy storage devices 200 aligned in the X-axis direction at positions where a plurality of energy storage devices 200 aligned in the X-axis direction and the Z-axis direction and a plurality of the spacers 300 (the first spacer 310 and the second spacers 320) aligned in the Z-axis direction are interposed therebetween in the Z-axis direction (first direction). Then, the first outer case 110 and the second outer case 120 collectively interpose and restrain the plurality of energy storage devices 200 and the plurality of spacers 300 to each other. As described above, it can also be said that the first outer case 110 and the second outer case 120 are a pair of end plates. A configuration of the outer case 100 (the first outer case 110 and the second outer case 120) will be described in detail later.

The energy storage device 200 is a secondary battery (battery cell) capable of charging and discharging electricity, and more specifically, is a nonaqueous electrolyte secondary battery such as a lithium ion secondary battery. The energy storage device 200 has a flat rectangular parallelepiped shape (prismatic shape), and the plurality of energy storage devices 200 is arrayed in the X-axis direction (second direction intersecting with the first direction) and the plurality of energy storage devices 200 is stacked in the Z-axis direction (first direction). In the present embodiment, eight energy storage devices 200 are arrayed in the X-axis direction and the Z-axis direction in a state where the eight energy storage devices 200 are placed horizontally (lying sideways) (in a state where long side surfaces 211a of the energy storage devices described later are directed in the Z-axis direction). Specifically, four energy storage devices 201 to 204 are arrayed in the X-axis direction from the X-axis negative direction toward the X-axis positive direction, and four energy storage devices 205 to 208 are arrayed in the X-axis direction from the X-axis negative direction toward the X-axis positive direction. Then, the four energy storage devices 201 to 204 and the four energy storage devices 205 to 208 are stacked (stacked flat) in the Z-axis direction.

The number of the energy storage devices 200 is not particularly limited, any number of the energy storage devices 200 may be arranged (arrayed) in the X-axis direction, and any number of the energy storage devices 200 may be arranged (stacked) in the Z-axis direction. The shape of the energy storage device 200 is not limited to the above-mentioned square shape, and may be a polygonal columnar shape, a cylindrical shape, an elliptical columnar shape, an oval columnar shape, or the like other than the above-mentioned prismatic shape. The energy storage device 200 is not limited to the nonaqueous electrolyte secondary battery, and may be a secondary battery other than the nonaqueous electrolyte secondary battery, or may be a capacitor. The energy storage device 200 may be not a secondary battery but a primary battery that can use stored electricity without being charged with electricity by a user. The energy storage device 200 may be a battery using a solid electrolyte. The energy storage device 200 may be a pouch type energy storage device. Configurations of the energy storage devices 200 will be described in detail later.

The spacers 300 are rectangular and flat spacers which are disposed and aligned with the energy storage devices 200 in the Z-axis direction (first direction) and are disposed adjacently to the energy storage devices 200. The spacers 300 are disposed in the Z-axis positive direction or the Z-axis negative direction of the energy storage device 200 so as to oppose the long side surface 211a of the energy storage device 200. The spacers 300 are formed by, for example, a resin member (insulating member) such as polycarbonate (PC), polypropylene (PP), polyethylene (PE), polystyrene (PS), polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), polyamide (PA), ABS resin, or a composite material thereof, or a heat insulating material such as a damper material.

In the present embodiment, the first spacer 310 and the pair of second spacers 320 are disposed as the spacers 300. The first spacer 310 is disposed at a position adjacent to the plurality of energy storage devices 200 arrayed in the X-axis direction in the Z-axis direction (first direction) so as to extend over the plurality of energy storage devices 200. Specifically, the first spacer 310 is disposed at a position adjacent in the Z-axis direction to the four energy storage devices 200 (201 to 204 or 205 to 208) aligned in the X-axis direction, and extends in the X-axis direction over the four energy storage devices 200. In the present embodiment, the first spacer 310 is an intermediate spacer that is disposed between the energy storage devices 200 adjacent to each other in the Z-axis direction (between the four energy storage devices 201 to 204 and the four energy storage devices 205 to 208).

The second spacers 320 are disposed over the plurality of energy storage devices 200 at positions where the plurality of energy storage devices 200 arrayed in the X-axis direction is interposed between the second spacer 320 and the first spacer 310 in the Z-axis direction (first direction). Specifically, the second spacers 320 are each disposed at a position where the four energy storage devices 200 (201 to 204 or 205 to 208) aligned in the X-axis direction is interposed between the second spacer 320 and the first spacer 310 in the Z-axis direction, and extend in the X-axis direction over the four energy storage devices 200. In the present embodiment, the second spacers 320 are end spacers each disposed between the energy storage devices 200 and the first outer case 110 or the second outer case 120. Specifically, the pair of second spacers 320 is disposed between the four energy storage devices 205 to 208 and the first outer case 110 and between the four energy storage devices 201 to 204 and the second outer case 120.

In this manner, the first spacer 310 and the pair of second spacers 320 are disposed so as to interpose the energy storage devices 200 in the Z-axis direction, and insulate the energy storage devices 200 from each other and the energy storage devices 200 from the first outer case 110 and the second outer case 120. Configurations of the spacers 300 (the first spacer 310 and the second spacers 320) will be described in detail later.

The bus bar plate 400 is a flat rectangular insulating member which is disposed between the energy storage devices 200 and the bus bars 500, and can insulate the bus bars 500 from other members and regulate positions of the bus bars 500. The bus bar plate 400 is formed by, for example, any insulating resin material or the like that can be used for the spacers 300. The bus bar plate 400 is disposed in the Y-axis negative direction of the plurality of energy storage devices 200, and is positioned with respect to the plurality of energy storage devices 200. Thus, the bus bars 500 are positioned with respect to the plurality of energy storage devices 200, and are joined to electrode terminals 220 which the plurality of energy storage devices 200 includes and which will be described later.

The bus bars 500 are plate-like members which are disposed in the Y-axis negative direction of the plurality of energy storage devices 200 and connected (joined) to the plurality of energy storage devices 200 and the terminal unit 30. In the present embodiment, three bus bars 510, the bus bar 520, and the bus bar 530 are disposed as bus bars 500. The bus bars 510 are disposed between the bus bar 520 and the bus bar 530, and connects the electrode terminals 220 of the adjacent energy storage devices 200 to each other. The bus bar 520 is disposed in the most X-axis negative direction among the plurality of bus bars 500, connects the electrode terminals 220 of the energy storage devices 200 in the most X-axis negative direction and the bus bar 31 of the terminal unit 30, and electrically connects the energy storage device 200 and the external terminal 31a. The bus bar 530 is disposed in the most X-axis positive direction among the plurality of bus bars 500, and electrically connects the electrode terminals 220 of the energy storage devices 200 in the most X-axis positive direction and the external terminal 21.

In the present embodiment, the bus bars 500 and the electrode terminals 220 of the energy storage devices 200 are connected (joined) to each other by welding, but may be connected (joined) to each other by bolt fastening or the like. The bus bar 500 is formed by, for example, any conductive material or the like that can be used for the bus bar 31. In the present embodiment, the bus bars 500 form four sets of energy storage device groups by connecting two energy storage devices 200 in parallel, and connect the four sets of energy storage device groups in series, but the connection form of the bus bars 500 is not particularly limited.

The bus bar cover 600 is an insulating cover member that is disposed so as to cover the bus bars 500 and insulates the bus bars 500 from other members. In the present embodiment, the bus bar cover 600 is a plate-like member arranged to extend in the X-axis direction over the plurality of bus bars 500 (510 to 530) so as to cover the plurality of bus bars 500. The bus bar cover 600 is disposed between the bus bars 500 and the wall (the long side wall 120b in the Y-axis negative direction) of the second outer case 120. Thus, the bus bar cover 600 insulates the plurality of bus bars 500 from other members such as the long side wall 120b. The bus bar cover 600 is formed by, for example, any insulating resin material or the like that can be used for the spacers 300. The bus bar cover 600 is disposed at a position where the bus bars 500 are interposed between the bus bar cover 600 and the bus bar plate 400, and is attached and fixed to the bus bar plate 400 by having a portion to be fitted to the bus bar plate 400, for example.

### [2 Description of energy storage device 200]

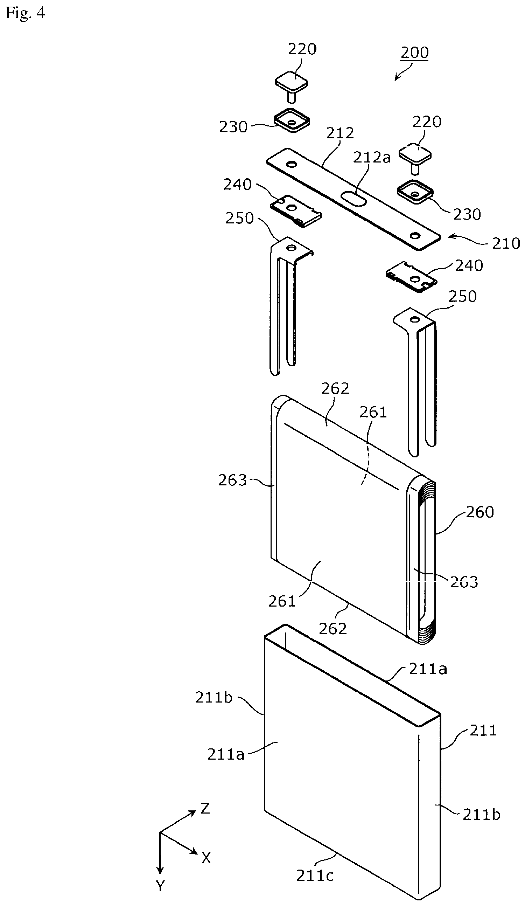

Configurations of the energy storage devices 200 will be described in detail. Note that the eight energy storage devices 200 (201 to 208) included in the energy storage unit 10 all have similar configurations, and thus the configuration of one energy storage device 200 will be described below. Fig. 4 is an exploded perspective view illustrating respective components of the energy storage device 200 according to the present embodiment in an exploded manner. Specifically, Fig. 4 is an exploded view of respective parts of the energy storage device 200 illustrated in Fig. 3 in a state where the energy storage device is vertically disposed (erected).

As illustrated in Fig. 4, the energy storage device 200 includes a case 210, a pair of (positive electrode side and negative electrode side) electrode terminals 220, and a pair of (positive electrode side and negative electrode side) gaskets 230. Inside the case 210, a pair of (positive electrode side and negative electrode side) gaskets 240, a pair of (positive electrode side and negative electrode side) current collectors 250, and an electrode assembly 260 are accommodated. Although an electrolyte solution (nonaqueous electrolyte) is sealed in the case 210, the illustration is omitted. A kind of the electrolyte solution is not particularly limited as long as performance of the energy storage device 200 is not impaired, and various electrolyte solutions can be selected. In addition to the above components, a spacer disposed on a side, a lower side, or the like of the electrode assembly 260, an insulating film enclosing the electrode assembly 260 or the like, an insulating sheet covering an outer surface of the case 210, or the like may be disposed.

The case 210 is a case having a rectangular parallelepiped shape (prismatic shape or box shape) including a case body 211 in which an opening is formed and a case lid body 212 that closes the opening of the case body 211. The case 210 has a structure in which the inside can be sealed by joining the case body 211 and the case lid body 212 to each other by welding or the like after the electrode assembly 260 and the like are accommodated in the case body 211. The material of the case body 211 and the case lid body 212 is not particularly limited, but is preferably a weldable metal such as stainless steel, aluminum, an aluminum alloy, iron, or a plated steel plate, for example.

The case body 211 is a member having a rectangular cylindrical shape and a bottom constituting a body of the case 210, and an opening is formed on a Y-axis negative direction side. That is, the case body 211 includes a pair of rectangular and planar (flat) long side surfaces 211a on both side surfaces in the Z-axis direction, a pair of rectangular and planar (flat) short side surfaces 211b on both side surfaces in the X-axis direction, and a rectangular and planar (flat) bottom surface 211c on the Y-axis positive direction side. The case lid body 212 is a rectangular plate-like member constituting a lid body of the case 210, and is arranged to extend in the X-axis direction in the Y-axis negative direction of the case body 211. The case lid body 212 is provided with a gas release valve 212a that releases the pressure when the pressure inside the case 210 increases, an electrolyte solution filling unit (not illustrated) for filling an electrolyte solution inside the case 210, and the like.

The electrode assembly 260 is an energy storage element (power generating element) formed by stacking a positive electrode plate, a negative electrode plate, and a separator. The positive electrode plate is obtained by forming a positive active material layer on a positive electrode substrate layer which is a current collecting foil made of a metal such as aluminum or an aluminum alloy. The negative electrode plate is obtained by forming a negative active material layer on a negative electrode substrate layer which is a current collecting foil made of a metal such as copper or a copper alloy. As the active material used for the positive active material layer and the negative active material layer, a known material can be appropriately used as long as it can occlude and release lithium ions. In the present embodiment, the electrode assembly 260 is a winding type (what is called a vertical winding type) electrode assembly which is formed by winding plates (a positive electrode plate and a negative electrode plate) around a winding axis (a virtual axis parallel to the X-axis direction) extending in the X-axis direction.

The plates (the positive electrode plate and the negative electrode plate) of the electrode assembly 260 are stacked in the Z-axis direction (first direction), and thus the Z-axis direction (first direction) is also referred to as a stacking direction. That is, the electrode assembly 260 is formed by stacking plates in the stacking direction. The electrode assembly 260 includes a pair of flat portions 261 aligned in the Z-axis direction and a pair of curved portions 262 aligned in the Y-axis direction by winding plates, and the stacking direction is a stacking direction of the plates in the flat portions 261. The flat portions 261 are flat portions connecting the ends of the pair of curved portions 262, and the curved portions 262 are portions curved in a semicircular shape or the like so as to protrude in the Y-axis direction. The direction in which flat surfaces of the flat portions 261 face or the opposing direction of the pair of flat portions 261 can be defined as the stacking direction. Therefore, it can be said that the energy storage devices 201 and 205 are disposed and aligned in the stacking direction. The same applies to the other energy storage devices 200. The X-axis direction in which the energy storage devices 201 to 204 are arrayed is also referred to as an arraying direction. That is, the energy storage devices 201 to 204 are arrayed in the arraying direction intersecting with the stacking direction. The same applies to the energy storage device 205 to 208.

In the electrode assembly 260, the positive electrode plate and the negative electrode plate are wound so as to be shifted from each other in the X-axis direction, and thus the positive electrode plate and the negative electrode plate each have a portion (active material layer non-forming portion) where the active material is not formed (applied) and the substrate layer is exposed at an end in a shifted direction. That is, the electrode assembly 260 include ends 263 that protrude from the flat portions 261 and the curved portions 262 toward both sides in the X-axis direction at both ends in the X-axis direction and are connected to the current collectors 250 by stacking the active material layer non-forming portions of the positive electrode plate and the negative electrode plate.

The electrode assembly 260 may be an electrode assembly in any form such as what is called a horizontal winding type electrode assembly formed by winding plates around a winding axis extending in the Y-axis direction, a stack type electrode assembly formed by stacking a plurality of flat plates, or a bellows type electrode assembly formed by folding plates in a bellows shape. In a case of the horizontal winding type electrode assembly, flat portions other than the curved portions and a connecting portion (tab) with the current collector are flat portions, and in a case of the stack-type electrode assembly and the bellows-type electrode assembly, flat portions other than the connecting portion (tab) with the current collector are flat portions.

The electrode terminals 220 are terminal members (a positive electrode terminal and a negative electrode terminal) of the energy storage device 200, and is disposed on the case lid body 212 so as to protrude in the Y-axis negative direction. The electrode terminals 220 are electrically connected to the positive electrode plate and the negative electrode plate of the electrode assembly 260 via the current collectors 250. The electrode terminals 220 are formed by a conductive member made of metal such as aluminum, an aluminum alloy, copper, or a copper alloy.

The current collectors 250 are conductive members (a positive electrode current collector and a negative electrode current collector) electrically connected to the electrode terminals 220 and the ends 263 of the electrode assembly 260. The current collectors 250 are made of aluminum, an aluminum alloy, copper, a copper alloy, or the like. The gaskets 230 and 240 are sealing members which are disposed between the case lid body 212 and the electrode terminals 220 and the current collectors 250 and have a flat plate shape and an insulating property. The gaskets 230 and 240 are formed by any insulating resin material or the like that can be used for the spacers 300.

### [3 Description of outer case 100 and spacers 300]

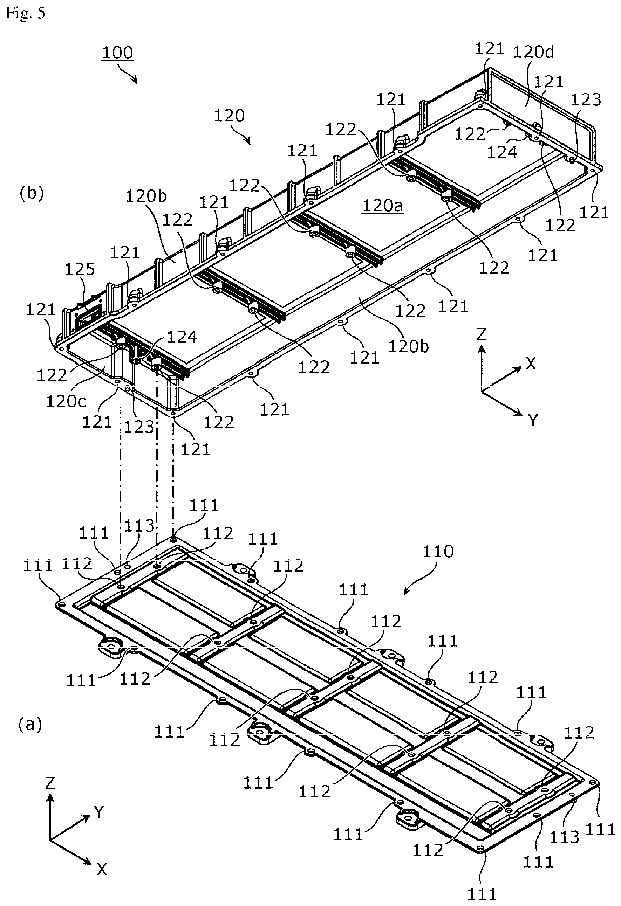

Configurations of the outer case 100 (the first outer case 110 and the second outer case 120) and the spacers 300 (the first spacer 310 and the second spacer 320) will be described in detail. Fig. 5 is a perspective view illustrating a configuration which is a part of the outer case 100 (the first outer case 110 and the second outer case 120) according to the present embodiment and accommodates the energy storage devices 200 therein. Specifically, (a) of Fig. 5 is a perspective view illustrating a configuration of the first outer case 110 as viewed from above, and (b) of Fig. 5 is a perspective view illustrating a configuration of a part of the second outer case 120 (a portion where the energy storage devices 200 are accommodated) as viewed from below. Hereinafter, a part of the second outer case 120 illustrated in (b) of Fig. 5 (a portion for accommodating the energy storage devices 200) is referred to as the second outer case 120 and described.

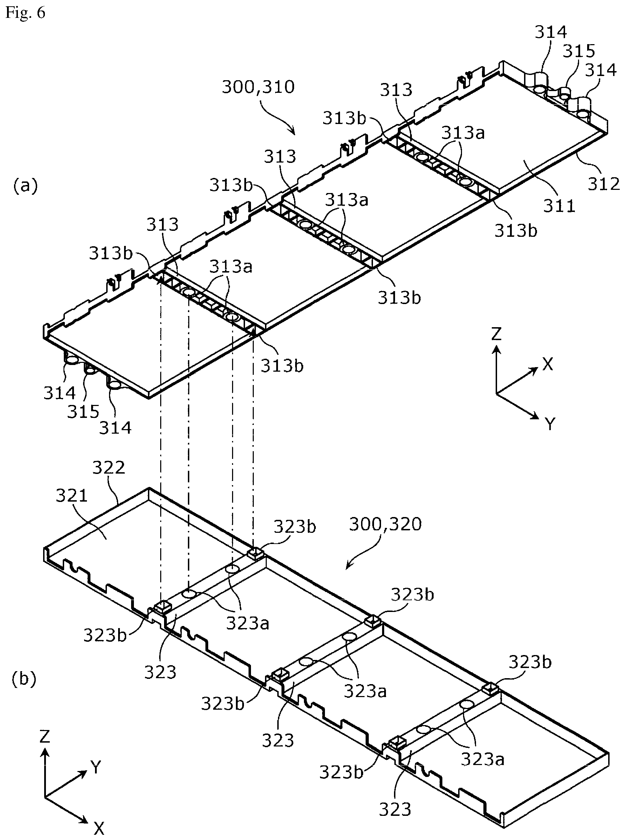

Fig. 6 is a perspective view illustrating configurations of the spacers 300 (the first spacer 310 and the second spacer 320) according to the present embodiment. Specifically, (a) of Fig. 6 is a perspective view illustrating a configuration of the first spacer 310 as viewed from below, and (b) of Fig. 6 is a perspective view illustrating a configuration of the second spacer 320 in the Z-axis negative direction as viewed from above. Note that the pair of second spacers 320 has similar configurations (shape that is plane-symmetrical with respect to the XY plane), and thus the second spacer 320 in the Z-axis positive direction is not illustrated in Fig. 6.

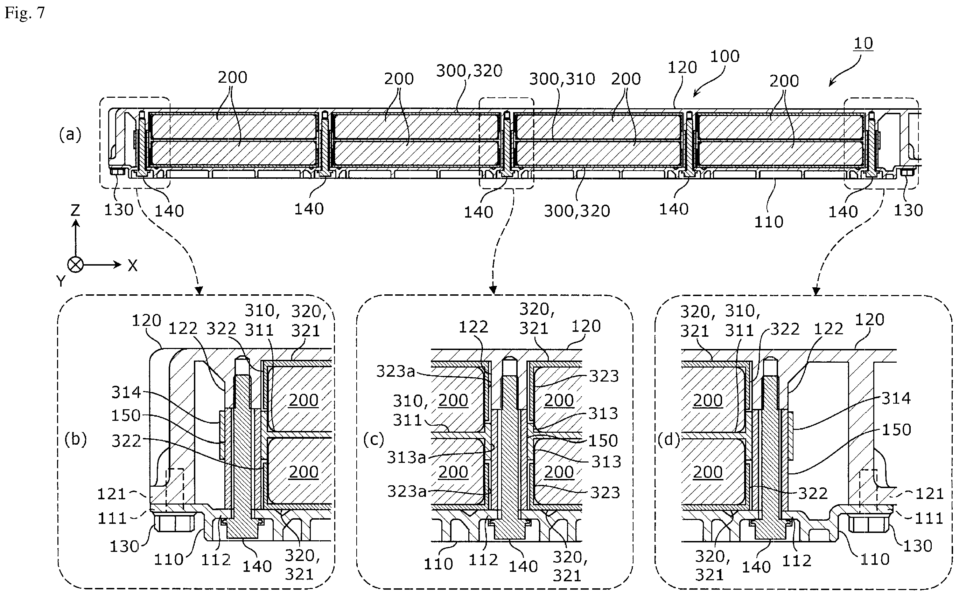

Fig. 7 is a cross-sectional view illustrating a positional relationship between the outer case 100 (the first outer case 110 and the second outer case 120) and the spacers 300 (the first spacers 310 and the second spacers 320) according to the present embodiment. Specifically, (a) of Fig. 7 illustrates a cross section of the energy storage unit 10 taken along a plane passing through the third connecting portions 112 of the first outer case 110 and fourth connecting portions 122 of the second outer case 120 and is parallel to the XZ plane. (b) to (d) of Fig. 7 illustrate, in an enlarged manner, portions surrounded by respective broken lines of an end in the X-axis negative direction, a center portion in the X-axis direction, and an end in the X-axis positive direction in (a) of Fig. 7.

### [3.1 Description of first outer case 110 and second outer case 120]

As illustrated in Fig. 5, the first outer case 110 includes the connecting portions 111 and 112 and engaging portions 113. The second outer case 120 includes the upper wall 120a, the pair of long side walls 120b, and a pair of short side walls 120c and 120d. The pair of long side walls 120b and the pair of short side walls 120c and 120d are provided with connecting portions 121 and engaging portions 123, and the upper wall 120a is provided with connecting portions 122 and 124. The above-described through hole 125 is formed in the long side wall 120b in the Y-axis negative direction. Hereinafter, the connecting portions 111 are also referred to as first connecting portions 111, the connecting portions 121 are also referred to as second connecting portions 121, the connecting portions 112 are also referred to as third connecting portions 112, and the connecting portions 122 are also referred to as fourth connecting portions 122.

The upper wall 120a is a flat and rectangular wall (top wall) positioned on the Z-axis positive direction side of the second outer case 120, and is disposed adjacent to the long side wall 120b and the short side walls 120c and 120d. The long side wall 120b is a flat and rectangular wall (side wall) positioned on both sides of the second outer case 120 in the Y-axis direction, is adjacent to the upper wall 120a and the short side walls 120c and 120d, and has an outer surface area larger than an outer surface area of the short side walls 120c and 120d. The short side walls 120c and 120d are flat and rectangular walls (side walls) positioned on both sides of the second outer case 120 in the X-axis direction, are adjacent to the upper wall 120a and the long side wall 120b, and have an outer surface area smaller than that of the long side wall 120b.

The first connecting portions 111 are connecting portions which are disposed on an outer peripheral portion of the first outer case 110 when viewed in the Z-axis direction (first direction) and are connected to the second connecting portions 121. The outer peripheral portion of the first outer case 110 is a portion located near an outer edge of the first outer case 110 as viewed in the Z-axis direction, and is, for example, a region within a range of about ten and several mm from the outer edge of the first outer case 110. In other words, the first connecting portions 111 are disposed at positions adjacent to the outer edge of the first outer case 110 as viewed in the Z-axis direction. The same applies to the expression "outer peripheral portion" below. In the present embodiment, as viewed in the Z-axis direction, fourteen first connecting portions 111 are annularly disposed and aligned along the outer edge of the first outer case 110 over the entire circumference of the outer peripheral portion of the first outer case 110. The second connecting portions 121 are connecting portions which are disposed on an outer peripheral portion of the second outer case 120 when viewed in the Z-axis direction (first direction) and are connected to the first connecting portions 111. Similarly, as for the second connecting portions 121, as viewed in the Z-axis direction, fourteen second connecting portions 121 are annularly disposed and aligned along the outer edge of the second outer case 120 over the entire circumference of the outer peripheral portion (the pair of long side walls 120b and the pair of short side walls 120c and 120d) of the second outer case 120. As described above, the first connecting portions 111 and the second connecting portions 121 are disposed at positions corresponding to (opposing) each other in the outer peripheral portions of the first outer case 110 and the second outer case 120, and are connected (joined) to each other.

Specifically, the first connecting portions 111 and the second connecting portions 121 are joined by joining members 130 (see Fig. 7). In the present embodiment, a through hole having a circular shape in a top view (as viewed in the Z-axis direction) is formed in each first connecting portion 111, and a female screw portion is formed in each second connecting portion 121. The joining members 130 are screws (bolts) in which a male screw portion is formed. With such a configuration, the male screw portion of each joining member 130 passes through the through hole of the first connecting portion 111 and is screwed into the female screw portion of the second connecting portion 121, whereby the joining member 130 is fixed to the second connecting portion 121, and the first connecting portion 111 and the second connecting portion 121 are joined. In the present embodiment, the first connecting portion 111 and the second connecting portion 121 are joined in a state of being in contact with each other in the Z-axis direction (see Fig. 7). Thus, the outer peripheral portion of the first outer case 110 and the outer peripheral portion (the pair of long side walls 120b and the pair of short side walls 120c and 120d) of the second outer case 120 are joined to each other, and the first outer case 110 and the second outer case 120 are connected (fixed) to each other. Note that a sealing member (gasket, packing) or the like may be interposed between the first connecting portion 111 and the second connecting portion 121.

The third connecting portions 112 are connecting portions which are disposed on an inside of the outer peripheral portion of the first outer case 110 as viewed in the Z-axis direction (first direction) and are connected to the fourth connecting portions 122. The inside of the outer peripheral portion of the first outer case 110 means a position farther from the outer edge of the first outer case 110 than the outer peripheral portion as viewed in the Z-axis direction, and is, for example, a position farther from the outer edge of the first outer case 110 by more than about ten and several mm. In other words, the third connecting portions 112 are disposed at positions interposing the outer peripheral portion with the outer edge of the first outer case 110 as viewed in the Z-axis direction. The same applies to the expression "the inside of the outer peripheral portion" below. The third connecting portions 112 are disposed at positions including a center portion of the first outer case 110 as viewed in the Z-axis direction (first direction). In the present embodiment, ten third connecting portions 112 are disposed and aligned in a grid pattern in the X-axis direction and the Y-axis direction inside the first connecting portion 111 as viewed in the Z-axis direction. Specifically, two third connecting portions 112 aligned in the Y-axis direction are disposed at each of both ends and the center portion in the X-axis direction and between the both ends and the center portion of the first outer case 110. Thus, the third connecting portions 112 are disposed at positions that interpose, in the X-axis direction, the respective energy storage devices 200 aligned in the X-axis direction (between the energy storage devices 200 aligned in the X-axis direction) (see Fig. 7).

The fourth connecting portions 122 are connecting portions which are disposed on the inside of the outer peripheral portion of the second outer case 120 as viewed in the Z-axis direction (first direction) and are connected to the third connecting portions 112. The fourth connecting portions 122 are disposed at positions including a center portion of the second outer case 120 as viewed in the Z-axis direction (first direction). In the present embodiment, ten fourth connecting portions 122 are disposed and aligned in a grid pattern in the X-axis direction and the Y-axis direction on the upper wall 120a located inside the second connecting portions 121 as viewed in the Z-axis direction. Specifically, two fourth connecting portions 122 aligned in the Y-axis direction are disposed at each of both ends and a center portion of the upper wall 120a in the X-axis direction and between the both ends and the center potion of the upper wall 120a. Thus, the fourth connecting portions 122 are disposed at positions that interpose, in the X-axis direction, the respective energy storage devices 200 aligned in the X-axis direction (between the energy storage devices 200 aligned in the X-axis direction) (see Fig. 7). As described above, the third connecting portions 112 and the fourth connecting portions 122 are disposed at positions corresponding to (opposing) each other on the inside of the outer peripheral portions of the first outer case 110 and the second outer case 120, and are connected (joined) to each other.

Specifically, the third connecting portions 112 and the fourth connecting portions 122 are joined by joining members 140 (see Fig. 7). In the present embodiment, a through hole having a circular shape in a top view (as viewed in the Z-axis direction) is formed in each third connecting portion 112, and a female screw portion is formed in each fourth connecting portion 122. The joining members 140 are screws (bolts) in which a male screw portion is formed. With such a configuration, the male screw portion of each joining member 140 passes through the through hole of the third connecting portion 112, is inserted into the cylindrical collar 150, and is screwed into the female screw portion of the fourth connecting portion 122. Thus, the joining members 140 is fixed to the fourth connecting portion 122, and the third connecting portion 112 and the fourth connecting portion 122 are joined to each other. In the present embodiment, the third connecting portion 112 and the fourth connecting portion 122 are joined in a state of being separated from each other in the Z-axis direction with the collar 150 interposed therebetween (see Fig. 7). In this way, the inside of the outer peripheral portion of the first outer case 110 and the inside of the outer peripheral portion of the second outer case 120 are joined to each other, and the first outer case 110 and the second outer case 120 are connected (fixed) to each other. Note that a configuration in which the collar 150 is not disposed in the joining by the joining member 140 may be employed.

In at least one of the third connecting portion 112 or the fourth connecting portion 122, the joining member 140 joining the third connecting portion 112 and the fourth connecting portion 122 is disposed at a position not exposed outward (see Fig. 7). In the present embodiment, since the female screw portion of the fourth connecting portion 122 does not penetrate the fourth connecting portion 122 in the Z-axis direction, the joining member 140 is disposed at a position where the joining member 140 is not exposed outward in the fourth connecting portion 122. The joining member 140 is, for example, a bolt (sealing bolt) that can seal the through hole of the third connecting portion 122 when joined to the fourth connecting portion 112. Thus, at the third connecting portion 112, airtightness is ensured by sealing the through hole by the joining member 140, and at the fourth connecting portion 122, airtightness is ensured because the joining member 140 is not exposed outward.

The engaging portions 113 are through holes which are disposed at the both ends (both ends of the outer peripheral portion) of the first outer case 110 in the X-axis direction and has a circular shape in a top view (as viewed in the Z-axis direction). The engaging portions 123 are columnar protrusions disposed at the both ends (both ends of the outer peripheral portion, the pair of short side walls 120c and 120d) of the second outer case 120 in the X-axis direction. The engaging portions 113 and 123 are disposed at positions corresponding to (opposing) each other, and the engaging portions 123 are inserted into the engaging portions 113 and are engaged with each other, whereby the first outer case 110 and the second outer case 120 are positioned. The connecting portions 124 are disposed at the both ends (both ends on the inside of the outer peripheral portion) of the upper wall 120a of the second outer case 120 in the X-axis direction, and are portions to which connecting portions 315 of the first spacer 310 described later are connected. In the present embodiment, a female screw portion is formed in each connecting portion 124, and a male screw portion of a joining member (not illustrated) passes through a through hole of a connecting portion 315 and is screwed into the female screw portion of the connecting portion 124, whereby the first spacer 310 is joined to the second outer case 120.

In the first outer case 110, in addition to the above-mentioned configuration, in order to improve strength, suppress swelling of the energy storage devices 200 and the like, projecting portions (swelling portions) which project toward the energy storage devices 200 in the Z-axis positive direction and have a rectangular shape as viewed in a top plan view are formed on the entire surface of the first outer case 110. The position, shape, and number of the projecting portions (swelling portions) of the first outer case 110 are not particularly limited, and a configuration in which the projecting portions (swelling portions) are not formed may be employed.

### [3.2 Description of first spacer 310 and second spacer 320]

As illustrated in Fig. 6, the first spacer 310 includes a first spacer body 311, first spacer walls 312, first projecting portions 313, and connecting portions 314 and 315. The second spacer 320 includes a second spacer body 321, a second spacer wall 322, and second projecting portions 323.

The first spacer body 311 is a flat and rectangular portion parallel to the XY plane constituting the body of the first spacer 310, and is disposed to extend in the X-axis direction. The first spacer body 311 is disposed at a position opposing the long side surfaces 211a of the cases 210 of the four energy storage devices 200 aligned in the X-axis direction, and are in a state of being in contact with the long side surfaces 211a of the four energy storage devices 200. The first spacer walls 312 are flat and rectangular side walls projecting from end edges on both sides in the X-axis direction and both sides in the Y-axis direction of the first spacer body 311 toward both sides in the Z-axis direction so as to surround the periphery of the first spacer body 311. The first spacer walls 312 are disposed so as to cover the short side surfaces 211b and the bottom surfaces 211c of the cases 210 of the opposing energy storage devices 200, and a part of the case lid body 212.

The first projecting portions 313 are elongated projecting portions that project to both sides in the Z-axis direction from the first spacer body 311 toward the pair of second spacers 320 and extend in the Y-axis direction (the third direction intersecting with the first direction and the second direction). Specifically, the first projecting portions 313 project toward a space between the plurality of energy storage devices 200, and are disposed between the plurality of energy storage devices 200. That is, the first projecting portions 313 project toward a space between two energy storage devices 200 adjacent to each other out of the plurality of energy storage devices 200 aligned in the X-axis direction, and are disposed between the two energy storage devices 200. In the present embodiment, three first projecting portions 313 are disposed with respect to four energy storage devices 200 aligned side by side in the X-axis direction. The first projecting portions 313 are disposed to extend from one end of the first spacer body 311 to the other end of the first spacer body 311 in the Y-axis direction. That is, the first projecting portions 313 are arranged to extend from one end of the plurality of energy storage devices 200 (two energy storage devices 200 interposing the first projecting portion 313) to the other end of the plurality of energy storage devices 200 (two energy storage devices 200 interposing the first projecting portion 313) in the Y-axis direction (third direction).

The first projecting portions 313 each include first through holes 313a and positioning portions 313b. The first through holes 313a are through holes that penetrate the first projecting portion 313 in the Z-axis direction and have a circular shape as viewed in the Z-axis direction, and into which the joining members 140 (and the collars 150) are inserted (see Fig. 7). In each of the first projecting portions 313, two first through holes 313a are formed at positions corresponding to the two joining members 140 (and the third connecting portion 112 and the fourth connecting portion 122). Thus, in this configuration, the joining members 140 are disposed between the plurality of energy storage devices 200, and peripheries of the joining members 140 are each covered with an inner wall of the first through hole 313a formed in the first projecting portion 313. The positioning portions 313b are disposed at both ends of the first projecting portions 313 in the Y-axis direction, and have rectangular through holes penetrating the first projecting portions 313 in the Z-axis direction as viewed from the Z-axis direction. The positioning portions 313b are portions to be engaged (fitted) with positioning portions 323b of the second projecting portions 323 to be described later.

The connecting portions 314 are portions that connect (fix) the first spacer 310 to the outer case 100 (the first outer case 110 and the second outer case 120) at both ends of the first spacer 310 in the X-axis direction. The connecting portions 314 each have a circular through hole penetrating in the Z-axis direction as viewed in the Z-axis direction, and the joining member 140 (and the collar 150) is inserted into the through hole (see Fig. 7). Two connecting portions 314 are disposed at positions corresponding to two joining members 140 (and the third connecting portions 112 and the fourth connecting portions 122) at each of both ends of the first spacer 310 in the X-axis direction. As described above, the connecting portions 315 are portions that connect (fix) the first spacer 310 to the second outer case 120, and are disposed on both ends of the first spacer 310 in the X-axis direction.

The second spacer body 321 is a flat and rectangular portion parallel to the XY plane constituting the body of the second spacer 320, and is disposed to extend in the X-axis direction. The second spacer body 321 is disposed at a position opposing the long side surfaces 211a of the cases 210 of the four energy storage devices 200 aligned in the X-axis direction, and are in a state of being in contact with the long side surfaces 211a of the four energy storage devices 200. The second spacer walls 322 are flat and rectangular side walls projecting from end edges on both sides in the X-axis direction and both sides in the Y-axis direction of the second spacer body 321 toward the first spacer 310 so as to surround the periphery of the second spacer body 321. The second spacer walls 322 are disposed so as to cover, with the first spacer walls 312, substantially the entire short side surfaces 211b and the entire bottom surfaces 211c of the cases 210 of the opposing energy storage devices 200, and a part of the case lid body 212.

The second projecting portions 323 are elongated projecting portions that project in the Z-axis direction from the second spacer body 321 toward the first projecting portions 313 of the first spacer 310 and extend in the Y-axis direction (third direction). Specifically, the second projecting portions 323 project toward a space between the plurality of energy storage devices 200, and are disposed between the plurality of energy storage devices 200. That is, the second projecting portions 323 project toward a space between two energy storage devices 200 adjacent to each other out of the plurality of energy storage devices 200 aligned in the X-axis direction, and are disposed between the two energy storage devices 200. In the present embodiment, three second projecting portions 323 are disposed with respect to the three first projecting portions 313 aligned in the X-axis direction. The second projecting portions 323 are disposed to extend from one end of the second spacer body 321 to the other end of the second spacer body 321 in the Y-axis direction. That is, the second projecting portions 323 are arranged to extend from one end of the plurality of energy storage devices 200 (two energy storage devices 200 interposing the second projecting portion 323) to the other end of the plurality of energy storage devices 200 (two energy storage devices 200 interposing the second projecting portion 323) in the Y-axis direction (third direction).

The second projecting portions 323 each include second through holes 323a and positioning portions 323b. The second through holes 323a are through holes that penetrate the second projecting portion 323 in the Z-axis direction and have a circular shape as viewed in the Z-axis direction, and into which the joining members 140 (and the collars 150 or the fourth connecting portions 122) are inserted (see Fig. 7). In each of the second projecting portions 323, the two second through holes 323a are formed at positions corresponding to the first through holes 313a of the first projecting portion 313, that is, at positions corresponding to the two joining members 140 (and the third connecting portion 112 and the fourth connecting portion 122). Thus, in this configuration, the joining members 140 are disposed between the plurality of energy storage devices 200, and the inner walls of the second through holes 323a of the second projecting portion 323 cover the peripheries of the joining members 140.

Specifically, as illustrated in Fig. 7, the first projecting portions 313 and the second projecting portions 323 are disposed between the third connecting portions 112 of the first outer case 110 and the fourth connecting portions 122 of the second outer case 120. Then, the joining members 140 join the third connecting portions 112 and the fourth connecting portions 122 in a state of penetrating the first through holes 313a of the first projecting portions 313 and the second through holes 323a of the second projecting portions 323. As described above, since the first outer case 110 and the second outer case 120 can also be said to be a pair of end plates, it can also be said that the joining members 140 are disposed in a state of penetrating the first projecting portions 313 and the second projecting portions 323 to join the pair of end plates. As described above, a part of the spacers 300 is disposed between the third connecting portions 112 and the fourth connecting portions 122 and a through hole is formed in the part, and the joining member 140 joins the third connecting portion 112 and the fourth connecting portion 122 in a state of penetrating the through hole.

In the present embodiment, the fourth connecting portions 122 are inserted into the second through holes 323a of the second projecting portions 323 of the second spacers 320 in the Z-axis positive direction, but may be configured not to be inserted into the second through holes 323a. The third connecting portions 112 may be configured to be inserted into the second through holes 323a of the second projecting portions 323 of the second spacers 320 in the Z-axis negative direction.

The positioning portions 323b are projecting portions which are disposed at the both ends of the second projecting portion 323 in the Y-axis direction, project from the second projecting portion 323 toward the positioning portions 313b of the first projecting portion 313, and have a rectangular shape as viewed in the Z-axis direction. The positioning portions 323b are inserted into the through holes of the positioning portions 313b and engaged (fitted) with the positioning portions 313b, thereby positioning the first projecting portions 313 and the second projecting portions 323. That is, the first projecting portions 313 and the second projecting portions 323 are positioned in the X-axis direction and the Y-axis direction by the positioning portions 313b and 323b. In the present embodiment, the through holes penetrating in the Z-axis direction are formed in the positioning portions 323b. Thus, for example, in this configuration, the state of portions of the positioning portions 313b and 323b in the Z-axis negative direction can be grasped by looking through the positioning portions 313b and 323b from the Z-axis positive direction.

### [4 Description of effects]

In the energy storage apparatus 1 according to the embodiment of the present invention, the outer case 100 in which the energy storage devices 200 are accommodated includes the first outer case 110 and the second outer case 120. The energy storage devices 200 are interposed and restrained between the first outer case and the second outer case. The first outer case 110 and the second outer case 120 include the first connecting portion 111 and the second connecting portion 121 that are joined in a state of being in contact with each other on the outer peripheral portions, and the third connecting portion 112 and the fourth connecting portion 122 that are joined by a joining member 140 in a state of being separated from each other more inside than the outer peripheral portions. By restraining the energy storage devices 200 with the outer case 100 (the first outer case 110 and the second outer case 120) that accommodates the energy storage devices 200 in this manner, the energy storage devices 200 can be restrained even if end plates are not disposed. Further, when the energy storage devices 200 are restrained by the outer case 100, there is a possibility that the energy storage devices 200 cannot be firmly restrained, and thus the first outer case 110 and the second outer case 120 are joined not only at a position where they are in a state of being in contact with each other (outer peripheral portion) but also at a position where they are separated from each other (more inside than the outer peripheral portion). Thus, the energy storage devices 200 can be firmly interposed and restrained by the outer case 100 (the first outer case 110 and the second outer case 120). Therefore, even if the end plates are not disposed, the energy storage devices 200 can be firmly interposed and restrained by the outer case 100 (the first outer case 110 and the second outer case 120), and hence the number of parts can be reduced. By reducing the number of components, weight reduction, size reduction, cost reduction, and productivity improvement can be achieved.

A part of the spacers 300 (the first projecting portion 313 and the second projecting portion 323) is disposed between the third connecting portion 112 and the fourth connecting portion 122, and thus the through hole (the first through hole 313a and the second through hole 323a) is formed in the part in order to join the third connecting portion 112 and the fourth connecting portion 122. Then, the joining member 140 is passed through the through hole to join the third connecting portion 112 and the fourth connecting portion 122. Thus, even when a part of the spacers 300 is disposed between the third connecting portion 112 and the fourth connecting portion 122, the first outer case 110 and the second outer case 120 can be firmly joined to each other. Therefore, even when the end plates are not disposed, the energy storage devices 200 can be firmly interposed and restrained by the outer case 100 (the first outer case 110 and the second outer case 120), and hence the number of parts can be reduced.

The third connecting portion 112 and the fourth connecting portion 122 are disposed at center portions of the first outer case 110 and the second outer case 120, and thus the first outer case 110 and the second outer case 120 are joined to each other at the center portions. Thus, the first outer case 110 and the second outer case 120 can be firmly joined to each other. Therefore, even when the end plates are not disposed, the energy storage devices 200 can be firmly interposed and restrained by the outer case 100 (the first outer case 110 and the second outer case 120), and hence the number of parts can be reduced.

The joining member 140 is not exposed outward in at least one of the third connecting portion 112 or the fourth connecting portion 122 (in the present embodiment, the fourth connecting portion 122), so that airtightness of the outer case 100 can be improved and a space can be saved.

In the stacking direction of the plates, the plurality of energy storage devices 200 that is arranged in a direction (X-axis direction) intersecting with the stacking direction (Z-axis direction) of the plates is interposed and restrained between the first outer case 110 and the second outer case 120. As described above, even when the plurality of energy storage devices 200 is arranged in the direction intersecting with the stacking direction of plates (arranged laterally), the plurality of energy storage devices 200 can be collectively restrained by the first outer case 110 and the second outer case 120. Thus, the number of parts can be reduced compared to a case where the plurality of energy storage devices 200 is individually restrained.

The energy storage apparatus 1 according to the embodiment of the present invention includes a first spacer 310 and a second spacer 320 which are disposed over the plurality of energy storage devices 200 at positions where the plurality of energy storage devices 200 arranged in the second direction (X-axis direction) are interposed between the first spacer 310 and the second spacer 320. The first spacer 310 includes a first projecting portion 313 that extends in the third direction (Y-axis direction) and projects toward between the plurality of energy storage devices 200, and the second spacer 320 includes a second projecting portion 323 that extends in the third direction and projects toward the first projecting portion 313. As described above, by disposing the first spacer 310 and the second spacer 320 on both sides of the plurality of energy storage devices 200, it is possible to improve the insulating property on both sides of the plurality of energy storage devices 200. By arranging the first projecting portion 313 of the first spacer 310 and the second projecting portion 323 of the second spacer 320 so as to extend between the plurality of energy storage devices 200, it is possible to improve the insulating property between the plurality of energy storage devices 200. Thus, insulating properties of the energy storage devices 200 can be enhanced.

Since the energy storage devices 200 arranged in the X-axis direction are separated from each other, it is possible to suppress transfer of heat between the energy storage devices 200 and to suppress mutual thermal influence between the energy storage devices 200. Since the first spacer 310 and the second spacer 320 are disposed over the plurality of energy storage devices 200 arranged in the X-axis direction, the number of parts can be reduced as compared with a configuration in which the first spacer 310 and the second spacer 320 are disposed for each energy storage device 200.

By extending the first projecting portion 313 of the first spacer 310 and the second projecting portion 323 of the second spacer 320 from one end of the plurality of energy storage devices 200 to the other end of the plurality of energy storage devices 200 in the third direction, it is possible to further improve the insulating property between the plurality of energy storage devices 200. Thus, it is possible to improve the insulating properties of the energy storage devices 200.

The first projecting portion 313 of the first spacer 310 and the second projecting portion 323 of the second spacer 320 include the positioning portions 313b and 323b, so that the first spacer 310 and the second spacer 320 can be positioned to each other. Accordingly, the movement of the first spacer 310 or the second spacer 320 with respect to the energy storage devices 200 can be suppressed. Thus, it is possible to improve the insulating properties of the energy storage devices 200. Since the first spacer 310 and the second spacer 320 are disposed over the plurality of energy storage devices 200 arranged in the X-axis direction, the number of positioning portions 313b and 323b to be disposed can be reduced as compared with the configuration in which the first spacer 310 and the second spacer 320 are disposed for each energy storage device 200.

The first outer case 110 and the second outer case 120 as a pair of end plates are disposed over the plurality of energy storage devices 200 arranged in the X-axis direction at positions where the plurality of energy storage devices 200, the first spacer 310, and the second spacer 320 are interposed between the first outer case 110 and the second outer case 120. Thus, even when the first outer case 110 and the second outer case 120 are formed by a conductive member made of metal or the like, it is possible to improve the insulating property between the plurality of energy storage devices 200 and the first outer case 110 and the second outer case 120 by the first spacer 310 and the second spacer 320. Accordingly, the insulating properties of the energy storage devices 200 can be enhanced. Since the plurality of energy storage devices 200 can be collectively interposed between the first outer case 110 and the second outer case 120 as a pair of end plates, the number of parts can be reduced as compared with a configuration where a pair of end plates is disposed for each energy storage device 200.

The joining member 140 that joins the first outer case 110 and the second outer case 120 as a pair of end plates is disposed so as to penetrate the first projecting portion 313 and the second projecting portion 323. Thus, even when the joining member 140 is formed by a conductive member made of metal or the like, it is possible to suppress conduction of the energy storage devices 200 with the joining member 140. Therefore, it is possible to prevent the energy storage devices 200 from being electrically connected to the first outer case 110 and the second outer case 120 through the joining member 140, and hence it is possible to improve the insulating properties of the energy storage devices 200. By disposing the joining member 140 so as to penetrate the first projecting portion 313 and the second projecting portion 323, the first outer case 110 and the second outer case 120 can be joined between the plurality of energy storage devices 200, and thus the first outer case 110 and the second outer case 120 can be firmly joined to each other. Thus, a necessity of thickening the first outer case or the second outer case as an end plate or forming the first outer case 110 or the second outer case 120 by using a member having high strength is lowered, and hence it is possible to achieve a reduction in size, a reduction in weight, a reduction in cost, and the like of the energy storage apparatus 1. Since the first outer case 110 and the second outer case 120 as a pair of end plates are disposed over the plurality of energy storage devices 200 aligned in the X-axis direction, the number of joining members 140 to be disposed can be reduced as compared with the configuration in which a pair of end plates is disposed for each energy storage device 200.

### [5 Description of modification example]

Although the energy storage apparatus 1 according to the embodiment of the present invention has been described above, the present invention is not limited to the present embodiment. The embodiment disclosed herein is illustrative in all respects and is not restrictive, and the scope of the present invention includes all modifications within the meaning and scope equivalent to the claims.

In the above-mentioned embodiment, in the outer case 100, the second outer case 120 is a member having a bottomed rectangular cylindrical shape in which an opening is formed on the Z-axis negative direction side, and the first outer case 110 is a flat rectangular member that closes the opening of the second outer case 120. However, the first outer case 110 may be a bottomed rectangular cylindrical member having an opening formed on the Z-axis positive direction side, and the second outer case 120 may be a flat rectangular lid that closes the opening of the first outer case 110, or may have any other shape.

In the above-mentioned embodiment, a through hole is formed in the first connecting portion 111 of the first outer case 110, and a female screw portion to be screwed with the male screw portion of the joining member 130 is formed in the second connecting portion 121 of the second outer case 120. However, a through hole may be formed in the second connecting portion 121, and a female screw portion screwed with the male screw portion of the joining member 130 may be formed in the first connecting portion 111. A method of connecting (joining) the first connecting portion 111 and the second connecting portion 121 may be another method, and may be, for example, joining by rivets, caulking joining, interposing by clips, adhesion, welding, heat sealing, ultrasonic welding, or the like. The same applies to the third connecting portion 112 and the fourth connecting portion 122.

In the above-mentioned embodiment, the third connecting portion 112 and the fourth connecting portion 122 are disposed at the center portions of the first outer case 110 and the second outer case 120, respectively, but may not disposed at the center portions. By increasing the plate thicknesses of the first outer case 110 and the second outer case 120 or the like, it is possible to achieve a configuration in which the energy storage devices 200 are firmly interposed and restrained by the first outer case 110 and the second outer case 120 even if the third connecting portion 112 and the fourth connecting portion 122 are not disposed at the center portions.

In the above-mentioned embodiment, the joining member 140 is disposed at a position where the joining member 140 is not exposed outward in the fourth connecting portion 122, and the joining member is exposed outward in the third connecting portion 112. However, instead of the fourth connecting portion 122 or in addition to the fourth connecting portion 122, in the third connecting portion 112, the joining member 140 may be configured not exposed outward. Both the third connecting portion 112 and the fourth connecting portion 122 may be configured such that the joining member 140 is exposed outward.

In the above-mentioned embodiment, the first projecting portion 313 of the first spacer 310 and the second projecting portion 323 of the second spacer 320 extend from one end of the energy storage devices 200 to the other end of the energy storage devices 200 in the third direction. However, at least one of the first projecting portion 313 or the second projecting portion 323 may be shorter than a length from one end of the energy storage devices 200 to the other end of the energy storage devices 200 in the third direction.

In the above embodiment, the first projecting portion 313 and the second projecting portion 323 may not include the positioning portions 313b and 323b.

In the above-mentioned embodiment, all the first connecting portions 111 and the third connecting portions 112 which the first outer case 110 includes and all the second connecting portions 121 and the fourth connecting portions 122 which the second outer case 120 includes have the above-described configurations, but any of the portions may not have the above-described configurations.

In the above-described embodiment, all of the first projecting portions 313 which the first spacer 310 includes and all of the second projecting portions 323 which the second spacer 320 includes have the above-mentioned configurations, but any of the portions may not have the above-described configurations.

The energy storage apparatus 1 does not need to include all the components described above. For example, the energy storage apparatus 1 may not include the control unit 20, the terminal unit 30, the bus bar plate 400, the bus bar cover 600, or the like.

A form constructed by arbitrarily combining the components included in the above embodiment and the modifications thereof is also included in the scope of the present invention.

The present invention can be achieved not only as the energy storage apparatus 1 but also as the outer case 100 (the first outer case 110 and the second outer case 120) or a combination of the outer case 100 and the spacers 300.

### INDUSTRIAL APPLICABILITY

The present invention can be applied to an energy storage apparatus including an energy storage device such as a lithium ion secondary battery.

### DESCRIPTION OF REFERENCE SIGNS

1: energy storage apparatus
21, 31a: external terminal
31, 500, 510, 520, 530: bus bar
100: outer case
110: first outer case
111: first connecting portion (connecting portion)
112: third connecting portion (connecting portion)
120: second outer case
121: second connecting portion (connecting portion)
122: fourth connecting portion (connecting portion)
124, 314, 315: connecting portion
130, 140: joining member
150: collar
200, 201, 202, 203, 204, 205, 206, 207, 208: energy storage device
210: case
220: electrode terminal
230, 240: gasket
250: current collector
260: electrode assembly
300: spacer
310: first spacer
311: first spacer body
312: first spacer wall
313: first projecting portion
313a: first through hole
313b, 323b: positioning portion
320: second spacer
321: second spacer body
322: second spacer wall
323: second projecting portion
323a: second through hole
400: bus bar plate
600: bus bar cover

## Claims

1. An energy storage apparatus (1) comprising an energy storage device (200) and an outer case (100) in which the energy storage device (200) is accommodated, wherein
the outer case (100) includes a first outer case (110) and a second outer case (120) which are disposed side by side in a first direction and are joined to each other,
the energy storage device (200) is interposed and restrained between the first outer case (110) and the second outer case (120) in the first direction,
the first outer case (110) and the second outer case (120) include:
a first connecting portion (111) and a second connecting portion (121) which are disposed on outer peripheral portions of the first outer case (110) and the second outer case (120) and are joined in a state of being in contact with each other when viewed from the first direction, and
a third connecting portion (112) and a fourth connecting portion (122) which are disposed more inside than the outer peripheral portions and are joined to each other when viewed from the first direction, and
the third connecting portion (112) and the fourth connecting portion (122) are joined by a joining member (140) in a state of being separated from each other, **characterized in that**
the energy storage apparatus (1) further comprising
a spacer (300) disposed side by side with the energy storage device (200) in the first direction, wherein
a part of the spacer (300) is disposed between the third connecting portion (112) and the fourth connecting portion (122) and a through hole is formed in the part, and
the joining member (140) joins the third connecting portion (112) and the fourth connecting portion (122) in a state of penetrating the through hole.

2. The energy storage apparatus (1) according to claim 1, wherein
the third connecting portion (112) and the fourth connecting portion (122) are disposed at center portions of the first outer case (110) and the second outer case (120) when viewed from the first direction.

3. The energy storage apparatus (1) according to claims 1 or 2, wherein
in at least one of the third connecting portion (112) or the fourth connecting portion (122), the joining member (140) that joins the third connecting portion (112) and the fourth connecting portion (122) is disposed at a position where the joining member (140) is not exposed outward.

4. The energy storage apparatus (1) according to any one of claims 1 to 3, wherein
the energy storage device (200) includes an electrode assembly (260) having stacked plates in the first direction, and a plurality of the energy storage devices (200) is arranged in a second direction intersecting with the first direction, and
the plurality of energy storage devices (200) is interposed and restrained between the first outer case (110) and the second outer case (120) in the first direction.

## Patentansprüche

1. Energiespeichereinrichtung (1), umfassend eine Energiespeichervorrichtung (200) und ein Außengehäuse (100), in dem die Energiespeichervorrichtung (200) aufgenommen ist, wobei
das Außengehäuse (100) ein erstes Außengehäuse (110) und ein zweites Außengehäuse (120) aufweist, die in einer ersten Richtung nebeneinander angeordnet und zusammengefügt sind,
die Energiespeichervorrichtung (200) in der ersten Richtung zwischen dem ersten Außengehäuse (110) und dem zweiten Außengehäuse (120) angeordnet und eingespannt ist,
das erste Außengehäuse (110) und das zweite Außengehäuse (120) aufweisen:
einen ersten Verbindungsabschnitt (111) und einen zweiten Verbindungsabschnitt (121), die an Außenumfangsabschnitten des ersten Außengehäuses (110) und des zweiten Außengehäuses (120) angeordnet sind und, aus der ersten Richtung betrachtet, in einem Zustand, in dem sie miteinander in Kontakt stehen, zusammengefügt sind, und
einen dritten Verbindungsabschnitt (112) und einen vierten Verbindungsabschnitt (122), die weiter innen als die Außenumfangsabschnitte angeordnet sind und, aus der ersten Richtung betrachtet, zusammengefügt sind, und
der dritte Verbindungsabschnitt (112) und der vierte Verbindungsabschnitt (122) in einem Zustand, in dem sie voneinander getrennt sind, durch ein Fügeelement (140) zusammengefügt sind, **dadurch gekennzeichnet, dass**
wobei die Energiespeichereinrichtung (1) des Weiteren umfasst:
einen Abstandshalter (300), der in der ersten Richtung neben der Energiespeichervorrichtung (200) angeordnet ist, wobei
ein Teil des Abstandshalters (300) zwischen dem dritten Verbindungsabschnitt (112) und dem vierten Verbindungsabschnitt (122) angeordnet ist und ein Durchgangsloch in dem Teil gebildet ist, und
das Fügeelement (140) den dritten Verbindungsabschnitt (112) und den vierten Verbindungsabschnitt (122) in einem Zustand zusammengefügt, in dem es sich durch das Durchgangsloch hindurch erstreckt.

2. Energiespeichereinrichtung (1) nach Anspruch 1, wobei
der dritte Verbindungsabschnitt (112) und der vierte Verbindungsabschnitt (122), aus der ersten Richtung betrachtet, an mittigen Abschnitten des ersten Außengehäuses (110) und des zweiten Außengehäuses (120) angeordnet sind.

3. Energiespeichereinrichtung (1) nach Anspruch 1 oder 2, wobei
in mindestens einem des dritten Verbindungsabschnitts (112) und des vierten Verbindungsabschnitts (122) das Fügeelement (140), das den dritten Verbindungsabschnitt (112) und den vierten Verbindungsabschnitt (122) zusammengefügt, an einer Position angeordnet ist, an der das Fügeelement (140) nicht nach außen freiliegt.

4. Energiespeichereinrichtung (1) nach einem der Ansprüche 1 bis 3, wobei
die Energiespeichervorrichtung (200) eine Elektrodenanordnung (260) aufweist, die gestapelte Platten in der ersten Richtung aufweist, und mehrere der Energiespeichereinrichtungen (200) in einer zweiten Richtung, die die erste Richtung schneidet, angeordnet sind, und
die mehreren Energiespeichervorrichtungen (200) in der ersten Richtung zwischen dem ersten Außengehäuse (110) und dem zweiten Außengehäuse (120) angeordnet und eingespannt sind.

## Revendications

1. Appareil de stockage d'énergie (1) comprenant un dispositif de stockage d'énergie (200) et un boîtier externe (100) dans lequel le dispositif de stockage d'énergie (200) est logé, dans lequel
le boîtier externe (100) comporte un premier boîtier externe (110) et un second boîtier externe (120) qui sont disposés côte à côte dans une première direction et sont assemblés l'un avec l'autre,
le dispositif de stockage d'énergie (200) est interposé et retenu entre le premier boîtier externe (110) et le second boîtier externe (120) dans la première direction,
le premier boîtier externe (110) et le second boîtier externe (120) comportent :
une première partie de raccordement (111) et une deuxième partie de raccordement (121) qui sont disposées sur des parties périphériques externes du premier boîtier externe (110) et du second boîtier externe (120) et sont assemblées dans un état de contact l'une avec l'autre lorsqu'elles sont vues depuis la première direction, et
une troisième partie de raccordement (112) et une quatrième partie de raccordement (122) qui sont disposées plus à l'intérieur que les parties périphériques externes et sont assemblées l'une avec l'autre lorsqu'elles sont vues depuis la première direction, et
la troisième partie de raccordement (112) et la quatrième partie de raccordement (122) sont assemblées par un élément d'assemblage (140) dans un état où elles sont séparées l'une de l'autre, **caractérisé en ce que**
l'appareil de stockage d'énergie (1) comprenant en outre
une entretoise (300) disposée côte à côte avec le dispositif de stockage d'énergie (200) dans la première direction, dans lequel
une partie de l'entretoise (300) est disposée entre la troisième partie de raccordement (112) et la quatrième partie de raccordement (122) et un trou traversant est formé dans la partie, et
l'élément d'assemblage (140) assemble la troisième partie de raccordement (112) et la quatrième partie de raccordement (122) dans un état de pénétration dans le trou traversant.

2. Appareil de stockage d'énergie (1) selon la revendication 1, dans lequel
la troisième partie de raccordement (112) et la quatrième partie de raccordement (122) sont disposées au niveau de parties centrales du premier boîtier externe (110) et du second boîtier externe (120) lorsqu'elles sont vues depuis la première direction.

3. Appareil de stockage d'énergie (1) selon les revendications 1 ou 2, dans lequel
dans au moins l'une de la troisième partie de raccordement (112) ou de la quatrième partie de raccordement (122), l'élément d'assemblage (140) qui assemble la troisième partie de raccordement (112) et la quatrième partie de raccordement (122) est disposé à une position où l'élément d'assemblage (140) n'est pas exposé vers l'extérieur.

4. Appareil de stockage d'énergie (1) selon l'une quelconque des revendications 1 à 3, dans lequel
le dispositif de stockage d'énergie (200) comporte un ensemble électrode (260) possédant des plaques empilées dans la première direction, et une pluralité des dispositifs de stockage d'énergie (200) est disposée dans une seconde direction coupant la première direction, et
la pluralité de dispositifs de stockage d'énergie (200) est interposée et retenue entre le premier boîtier externe (110) et le second boîtier externe (120) dans la première direction.
